# EUROPEAN PATENT APPLICATION

(11) **EP 2 704 516 A2**
(43) Date of publication of application: **05.03.2014**
(21) Application number: 11789245.5
(22) Date of filing: 03.06.2011
(51) Int. Cl.: H04W 88/02

(54) **WIRELESS TERMINAL**

(71) Applicant: Huawei Device Co., Ltd., Shenzhen, Guangdong 518129 (CN)
(72) Inventor: XU, Anmin, Shenzhen Guangdong 518129 (CN); ZHANG, Xuefei, Shenzhen Guangdong 518129 (CN); SUN, Shuhui, Shenzhen Guangdong 518129 (CN)
(74) Representative: Lord, Michael
(86) International application number: PCT/CN2011/075297
(87) International publication number: WO 2011/150866

(57) **Abstract**

An embodiment of the present invention provides a wireless terminal, including a PCB and an antenna system, where the antenna system includes a positioning antenna for receiving a positioning carrier signal from a satellite, and a wave director is disposed in a radiation area of the positioning antenna, and is used to couple energy from the positioning antenna to the wave director and radiate the energy to space. In this embodiment of the present invention, a wave director is disposed in a radiation area of a positioning antenna, and a space low-resistance path for a carrier signal (namely 1575.42MHz radio frequency signal) from a satellite is formed, so that it can be implemented that energy of the positioning antenna is coupled to the wave director, and the coupled energy is radiated by the wave director to space to form a coupling radiation field, thereby improving radiation efficiency of an antenna system and further implementing directional guidance for radiation at the same time.

## Description

### TECHNICAL FIELD

An embodiment of the present invention relates to communications technologies, and in particular, to a wireless terminal.

### BACKGROUND

With the development of wireless communications technologies, a wireless terminal is integrated with an increasing number of application functions, and a positioning function is among the functions. The wireless terminal is disposed with a positioning antenna for receiving a positioning carrier signal from a satellite, for example, a positioning antenna in a positioning system such as a global positioning system (Global Positioning System, abbreviated as GPS), a Galileo satellite navigation system, and a global navigation satellite system (GLObal NAvigation Satellite System, abbreviated as GLONASS).

However, in the prior art, not all energy from the positioning antenna is radiated to space, but a part of the energy is returned through a feeder of the antenna to a printed circuit board (Printed Circuit Board, abbreviated as PCB) and is radiated and consumed by the PCB, thereby decreasing radiation efficiency of the positioning antenna.

### SUMMARY

An embodiment of the present invention provides a wireless terminal, which is used for improving radiation efficiency.

The embodiment of the present invention provides a wireless terminal, including a PCB and an antenna system, where the antenna system includes a positioning antenna for receiving a positioning carrier signal from a satellite; and a wave director is disposed in a radiation area of the positioning antenna, and is used to couple energy from the positioning antenna to the wave director and radiate the energy to space.

It can be known from the foregoing technical solution that, in an embodiment of the present invention, a wave director is disposed in a radiation area of a positioning antenna, and a space low-resistance path for a carrier signal (namely 1575.42MHz radio frequency signal) from a satellite is formed, so that it can be implemented that energy of the positioning antenna is coupled to the wave director, and the coupled energy is radiated by the wave director to space to form a coupling radiation field, thereby improving radiation efficiency of an antenna system and further implementing directional guidance for radiation at the same time.

### BRIEF DESCRIPTION OF DRAWINGS

To illustrate the technical solution in an embodiment of the present invention or in the prior art more clearly, the following briefly introduces accompanying drawings required for describing the embodiment or the prior art. Apparently, the accompanying drawings in the following description show merely some embodiments of the present invention, and persons of ordinary skill in the art may further obtain other drawings according to these accompanying drawings without creative efforts.
FIG. 1 is a schematic structural diagram of a wireless terminal according to an embodiment of the present invention;
FIG. 2 is a schematic structural diagram of an antenna system of the wireless terminal according to the embodiment of the present invention; and
FIG. 3 is a schematic size diagram of the antenna system of the wireless terminal according to the embodiment of the present invention.

### DESCRIPTION OF EMBODIMENT

To make the objective, the technical solution, and the advantage of the embodiment of the present invention more clearly, the following clearly and completely describes the technical solution in the embodiment of the present invention with reference to the accompanying drawings in the embodiment of the present invention. Apparently, the embodiment to be described is merely a part rather than all of the embodiments of the present invention. All other embodiments obtained by persons of ordinary skill in the art based on the embodiment of the present invention without creative efforts shall fall within the protection scope of the present invention.

It should be noted that: a wireless terminal involved in the embodiment of the present invention includes, but is not limited to, a terminal having a positioning function, such as a mobile phone, a personal digital assistant (Personal Digital Assistant, abbreviated as PDA), a wireless handheld device, a personal computer, a wireless netbook, a portable computer, an MP3 player, and an MP4 player.

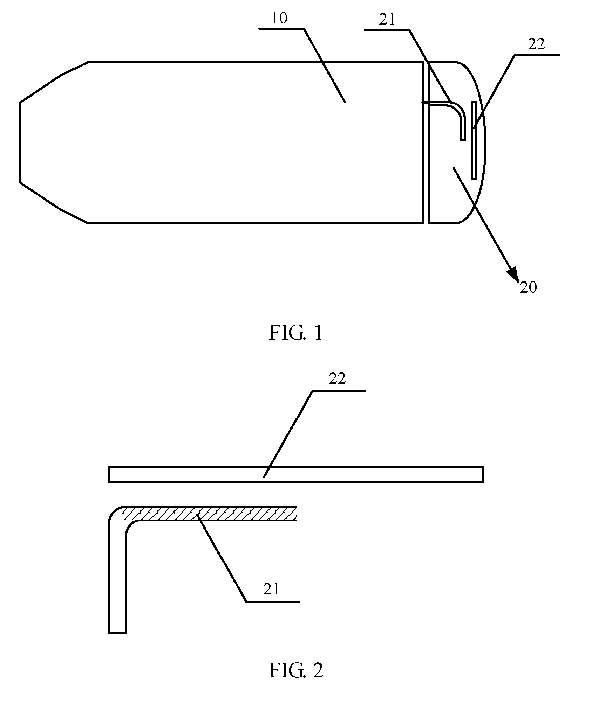

FIG. 1 is a schematic structural diagram of a wireless terminal according to an embodiment of the present invention. As shown in the FIG. 1, the wireless terminal in this embodiment may include a PCB 10 and an antenna system 20. The antenna system 20 may include a positioning antenna 21 for receiving a positioning carrier signal from a satellite. A wave director 22 is disposed in a radiation area of the positioning antenna 21, and is used to couple energy from the positioning antenna 21 to the wave director 22 and radiate, to space, the energy coupled in the wave director 22.

The positioning antenna 21 may include, but is not limited to, a monopole (monopole) antenna, an inverted F-shaped antenna (Inverted F-shaped Antenna, abbreviated as IFA) or a planar inverted F-shaped antenna (Planar Inverted F-shaped Antenna, abbreviated as PIFA), which is not limited in this embodiment.

Because an electromagnetic wave is propagated in space as a periodical sine or cosine wave, one-fourth of a wavelength in a dielectric medium is considered as an interval, that is, from a zero-crossing to a wave peak or from a zero-crossing to a wave trough. When a length of the wave director is an integer multiple of half of the wavelength in the dielectric medium, the wave director has gravitation for an electromagnetic wave of a corresponding frequency, and can guide the electromagnetic wave to radiate towards the direction, that is, a directing effect is produced. In some circumstances, the wave director is limited by a size of the entire wireless terminal. Although space of one-fourth of the wavelength in the dielectric medium may not be created between the wave director and the positioning antenna 2, a short-distance coupling may be further produced, an effect of which is similar to that produced when the space of one-fourth of the wavelength in the dielectric medium is created between the wave director and the poisoning antenna 21 dielectric medium.

For example, the wave director 22 in this embodiment may be a wave director with a head end connected to a tail end, and its length may be an even multiple of half of the wavelength in the dielectric medium. Because for a closed curve, resonance is mainly related to a perimeter. When the perimeter is an even multiple of half of the wavelength in the dielectric medium, the resonance is the strongest.

For example: optionally, the wave director 22 in this embodiment may also be a wave director with a head end not connected to a tail end, which is not limited in this embodiment, and its length may be an odd multiple of half of the wavelength in the dielectric medium. Because for a thin and long metallic conductor, resonance is the strongest when its length is half of the wavelength (an odd multiple of half of the wavelength in the dielectric medium).

In this embodiment, the wave director 22 may be disposed at any position in the radiation area of the positioning antenna 21 to implement the coupling of the energy from the positioning antenna 21 to the wave director 22 and the radiation of the energy coupled in the wave director 22 to space. Preferably, the wave director 22 in this embodiment may specifically be disposed parallel to a near tail end portion of the positioning antenna 21. As shown in FIG. 2, the wave director 22 is disposed parallel to a shaded portion of the positioning antenna 21. A tail end of the positioning antenna 21 refers to an end away from a connection end between the positioning antenna 21 and the PCB 10 (a feeder end), and may also be referred to as a remote end. For example: when the positioning antenna 21 is L-shaped, the near tail end portion is the bottom part of the L shape.

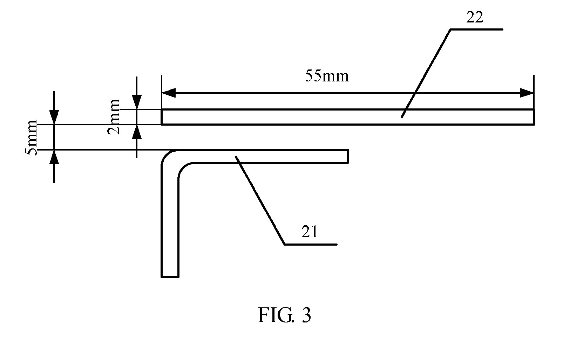

Specifically, the positioning antenna 21 may be disposed on a back cover of the wireless terminal, and the wave director 22 may be disposed on the top of the entire wireless terminal. As shown in FIG. 3, a distance between the wave director 22 and the near tail end portion of the positioning antenna 21 may be 4.5mm to 5.5mm, and preferably, 5mm may be preferably selected; the wave director 22 may be straight bar metal, or may also be arched metal which bends against the positioning antenna 21, where the length of the wave director 22 may be 52mm to 58mm, and preferably, 55mm may be preferably selected; a width of the wave director 22 may be 1mm to 3mm, and preferably, 2mm may be preferably selected; and for a size of the positioning antenna 21, reference may be made to corresponding parameters designed in the prior art, and details are not repeatedly described herein.

Specifically, radiation efficiency of the antenna system may be as shown in Table 1.

**Table 1 Radiation efficiency of an antenna system**

| **Frequency (MHz)** | **Radiation Efficiency (%)** |
|---|---|
| 1560 | 58.5498 |
| 1565 | 63.4205 |
| 1570 | 67.0941 |
| 1575 | 70.6611 |
| 1580 | 73.7553 |
| 1585 | 75.0656 |
| 1590 | 75.1225 |

In this embodiment, a wave director is disposed in a radiation area of a positioning antenna, and a space low-resistance path for a carrier signal (namely 1575.42MHz radio frequency signal) from a satellite is formed, so that it can be implemented that energy of the positioning antenna is coupled to the wave director, and the coupled energy is radiated by the wave director to space to form a coupling radiation field, thereby improving radiation efficiency of an antenna system and further implementing directional guidance for radiation at the same time.

Finally, it should be noted that the foregoing embodiment is merely intended for describing the technical solution of the present invention rather than limiting the present invention. Although the present invention is described in detail with reference to the foregoing embodiment, persons of ordinary skill in the art should understand that they may still make modifications to the technical solution described in the foregoing embodiment or make equivalent replacements to a part of the technical features of the technical solution described in the foregoing embodiment; however, these modification or replacements do not make the essence of the corresponding technical solution depart from the spirit and scope of the technical solution of the embodiment of the present invention.

## Claims

1. A wireless terminal, comprising a PCB and an antenna system, wherein the antenna system comprises:
a positioning antenna, configured to receive a positioning carrier signal from a satellite, and
a wave director, disposed in a radiation area of the positioning antenna, and configured to couple energy from the positioning antenna and radiate the energy to space.

2. The wireless terminal according to claim 1, wherein the wave director is a wave director with a head end connected to a tail end or a wave director with a head end not connected to a tail end.

3. The wireless terminal according to claim 2, wherein a length of the wave director with the head end connected to the tail end is an even multiple of half of a wavelength in a dielectric medium.

4. The wireless terminal according to claim 2, wherein a length of the wave director with the head end not connected to the tail end is an odd multiple of half of a wavelength in a dielectric medium.

5. The wireless terminal according to any one of claims 1 to 4, wherein the wave director is parallel to a near tail end portion of the positioning antenna.

6. The wireless terminal according to claim 5, wherein a distance between the wave director and the near tail end portion of the positioning antenna is 4.5mm to 5.5mm.

7. The wireless terminal according to claim 5, wherein the length of the wave director is 52mm to 58mm.

8. The wireless terminal according to claim 5, wherein a width of the wave director is 1mm to 3mm.
